# EUROPEAN PATENT APPLICATION

(11) **EP 3 725 201 A1**
(43) Date of publication of application: **21.10.2020**
(21) Application number: 20169395.9
(22) Date of filing: 14.04.2020
(51) Int. Cl.: A47L 5/26, A47L 5/30, A47L 7/02, A47L 9/28, A47L 11/08, A47L 11/202

(54) **BATTERY POWERED APPLIANCES**

(30) Priority: 17.04.2019 CN 201910306504
(71) Applicant: CONTA S.R.O, 44101 Podborany (CZ)
(72) Inventor: BASSETT, Alexander Anthony Denny, Suzhou, Jiangsu 215006 (CN); AN, Kevin, Suzhou, Jiangsu (CN)
(74) Representative: Murgitroyd & Company

(57) **Abstract**

A vacuum cleaning appliance comprises a body portion (10) having a first battery (15) and a fan motor (19) which is arranged to draw power from the first battery (15). The appliance further comprises a floor cleaning head portion (11) having a second battery (16) and an agitator motor (20) arranged to draw power from the second battery (16). The body and head portions (10, 11) are interconnected such that the motor of one portion is also able to draw power from the battery of the other portion. In this manner the batteries (15, 16) supplement and complement each other and increase the operating time and ratings of the appliance.

## Description

This invention relates to battery powered appliances.

Hand-held or portable vacuum cleaning appliances generally comprise a body portion which is connected to a cleaning nozzle, head, brush or other cleaning tool portion via an inlet duct which may be elongate or extendable. A motor and fan unit disposed in the body draws air into the body through the inlet via the tool portion and into a separation device, which separates and collects any dirt, dust or other matter in the airflow.

Typically, hand-held or portable vacuum cleaning appliances comprise a rechargeable battery in the body which powers the motor of the motor and fan unit when the cleaner is activated. In order to improve floor cleaning, it is well-known to provide portable vacuum cleaning appliances with a floor cleaning head portion having a roller brush or so-called agitator disposed across a suction mouth on the underside of the floor cleaning head portion. A further motor inside the head rotates the brush or agitator about its longitudinal axis, so as to beat or sweep the floor surface whilst performing vacuum cleaning, thereby improving the cleaning efficiency of the vacuum cleaner.

One such battery powered vacuum cleaning appliance is disclosed in US2017/172362 and comprises electrical conductors which extend from the battery in the body portion along the inlet duct, so as to power the motor in the floor cleaning head portion.

A problem with the vacuum cleaning appliance of US2017/172362 is that the battery can quickly become exhausted due to the current drawn by two motors. Whilst this problem can be solved by adding a larger capacity battery, the provision of a larger capacity battery is undesirable because it makes the body portion heavy and difficult for a user to handle for any length of time.

The foregoing in mind, we have now devised an improved battery powered appliance.

In accordance with the present invention, there is provided an appliance comprising:
a first portion having a first battery and a first device, the first device being arranged to draw power from said first battery;
a second portion having a second battery and a second device, the second being arranged to draw power from said second battery, the first and second portions being interconnected such that a said device of one portion is also able to draw power from the battery of the other portion.

The provision of two batteries extends the operating time of the appliance and also its perceived power rating. It will be appreciated that since a user may only have to bear the weight of one portion of the appliance, the provision of two batteries does not make the appliance any more tiring to use.

The first and/or second battery may be detachable from the appliance for recharging, and the appliance may be arranged such that both devices remain operable from one battery when the other battery is removed, disconnected or low in power. An inlet may be provided on one of the portions for connecting to a charging device for charging one or both batteries without having to remove them from the appliance.

The voltage and/or capacity (Watt/hours) rating of one battery may be greater than that of the other battery. It will be appreciated that a battery having a lower voltage and/or capacity rating will be lighter in weight and hence will be easier for a user to bear. Also, a battery having a lower voltage and/or capacity rating will be physically smaller, thereby enabling one portion of the apparatus to have a reduced size compared with traditional apparatus.

The batteries may be connected in series or parallel.

The provision of two batteries also enables one of the devices to be operated at an increased voltage and/or current compared with that which would be available from just one battery.

The first and second portions of the appliance may be mechanically and electrically separable from each other and at least one of the portions of the appliance may be operable independently of the other.

The batteries may comprise a plurality of cells and each cell may be of the same voltage and capacity as the cells of the other battery.

Each portion of the appliance may comprise a control unit for controlling and regulating the power applied to each respective device from one or both batteries.

The appliance may comprise a vacuum cleaner, in which:
said first portion comprises a body portion and the first device thereof comprises a motor of a motor and fan unit which is arranged to draw air into the vacuum cleaner; and
said second portion comprises a floor cleaning head provided with the second device.

The second device in the floor cleaning head may comprise a motor for rotating a floor engaging member, such as a brush or agitator.

An embodiment of the present invention will now be described by way of an example only and the reference to the accompanying drawings, in which:
Figure 1 is a perspective view of a vacuum cleaner in accordance with the present invention; and
Figure 2 is a schematic diagram of the vacuum cleaner of figure 1.

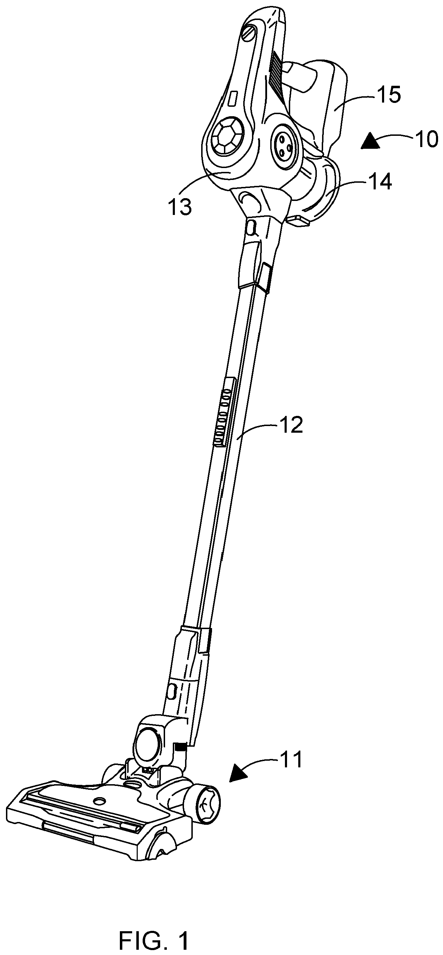

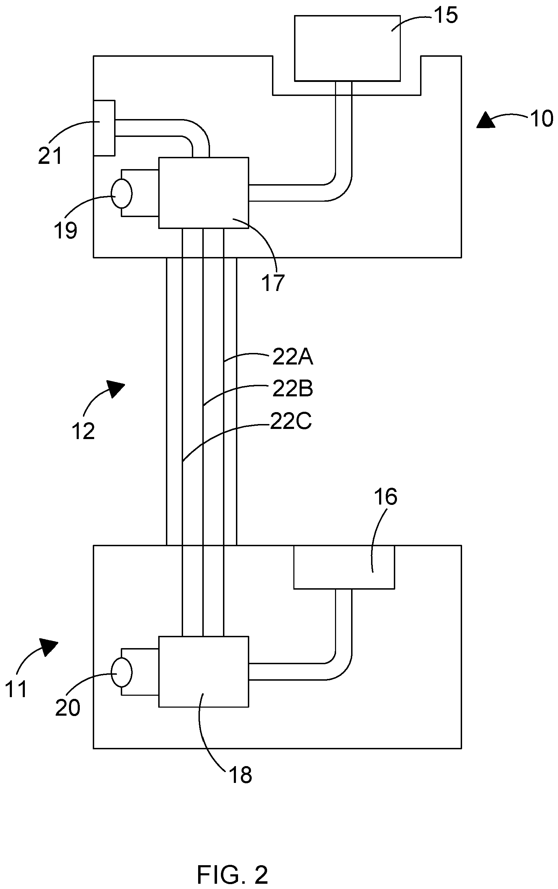

Referring to Figures 1 and 2 of the drawings, there is shown a hand-held portable vacuum cleaner of the so-called stick type. The vacuum cleaner comprises a body portion (10) which is connected to a floor engaging head portion (11) via an elongate inlet duct (12). A motor and fan unit (19) in the body (10) draws air into the body (10) through the inlet duct (12) via the head and into a separation device (not shown) which separates and collects any dirt, dust or other matter in the air flow.

The body portion (10) comprises a detachable rechargeable battery (15) which comprises a plurality of cells. Each cell may have a voltage of 3.6 volts and a capacity of 9 Watt/hours.

The battery (15) is connected to a control circuit (17) disposed inside the body (10), the motor and fan unit (19) also being connected to the control circuit (17). A socket (21) is provided on the body for connecting to a charger, the socket being connected to the battery (15) via the control unit (17).

A plurality of electrical conductors (22A, 22B, 22C) extend from the control unit (17) in the body (10) along the elongate inlet duct (12) to the head (11) of the vacuum cleaner. The distal end of the conductors (22A, 22B, 22C) are connected to a control unit (18) disposed inside the head (11). A rechargeable battery (16) is disposed inside the head (11) and, in the example shown, the battery (16) is not detachable although it will be appreciated that a detachable battery could alternatively be provided. The battery (16) comprises a plurality of cells which may be of the same type as the cells of the battery (15). The head (11) further comprises a motor (20) for rotating a brush, agitator or other floor-engaging member (not shown).

The body (10) of the cleaner comprises a trigger (not shown) which, when actuated, causes the motor of the motor and fan unit (19) and the motor (20) in the head (11) to operate. It will be appreciated that the provision of two batteries (15, 16) substantially increases the overall operating time of the vacuum cleaner before it needs to be recharged. Also, since the head (11) is supported on the floor, the user only has to bear the weight of the battery (15) and not the battery (16) and hence the battery (16) could have a large capacity.

The battery (15) may be detachable from the appliance for remotely recharging. Alternatively or additionally the battery (15) may be recharged by connecting a charger to the socket (21), which also serves to recharge the battery (16) in the head (11) of the vacuum cleaner. Advantageously, the vacuum cleaner is configured to continue operating when the battery (15) is removed for charging or when either battery (15, 16) becomes exhausted.

The voltage and/or capacity of one of the batteries (15, 16) may be greater than that of other battery, for example as shown in the table below where a Type A and a Type B embodiments of a vacuum cleaner are envisaged.

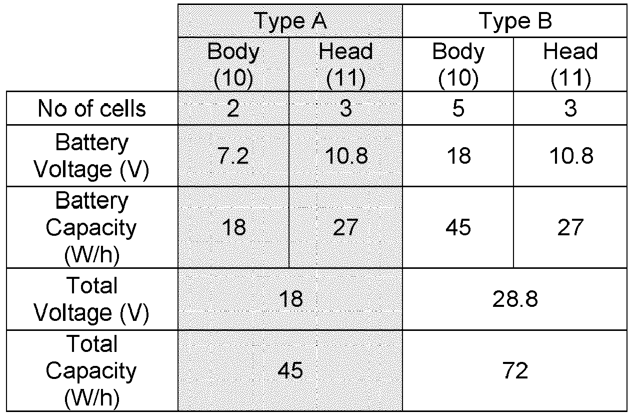

It will be appreciated that in the Type A vacuum cleaner, the body portion (10) is much lighter and less bulky than that of the Type B, yet the vacuum cleaner still has good voltage and power ratings due to the fact that the battery in the head (11) supplements the battery in the body (10).

In the Type B vacuum cleaner, the cleaner has an increased voltage and power rating due to the provision of three extras cells in the battery (15) of the body (10). The provision of these extra cells enables the motor (20) and the head (11) to be operated at an increased power compared with that of the motor (20) and the head (11) of the Type A vacuum cleaner.

In either type of vacuum cleaner, the head (11) can be detached from the body (10) to enable the body (10) to be used without the head (11), whereupon the head (11) could be recharged.

The present invention thus provides a vacuum cleaning appliance which comprises a body portion (10) having a first battery (15) and a fan motor (19) which is arranged to draw power from the first battery (15). The appliance further comprises a floor cleaning head portion (11) having a second battery (16) and an agitator motor (20) arranged to draw power from the second battery (16). The body and head portions (10, 11) are interconnected such that the motor of one portion is also able to draw power from the battery of the other portion. In this manner the batteries (15, 16) supplement and complement each other and increase the operating time and ratings of the appliance.

A vacuum cleaner in accordance with the present invention is simple and inexpensive in construction yet enables the vacuum cleaner to have a longer operating duty cycle with the ability to operate at increased power.

## Claims

1. An appliance comprising:
a first portion having a first battery and a first device, the first device being arranged to draw power from said first battery;
a second portion having a second battery and a second device, the second being arranged to draw power from said second battery, the first and second portions being interconnected such that a said device of one portion is also able to draw power from the battery of the other portion.

2. An appliance as claimed in claim 1, in which the first and/or second battery is detachable from the appliance for recharging.

3. An appliance as claimed in claims 1 or 2, arranged such that both devices remain operable from one battery when the other battery is disconnected or low in power.

4. An appliance as claimed in any preceding claim, in which a rating of one battery is greater than that of the other battery.

5. An appliance as claimed in any preceding claim, in which the batteries are connected in series or parallel.

6. An appliance as claimed in any preceding claim, arranged to apply power to a said device which exceeds the power that can be applied thereto from the battery of the portion in which the device is provided.

7. An appliance as claimed in any preceding claim, in which the first and second portions of the appliance are mechanically and electrically separable from each other.

8. An appliance as claimed in claim 7, in which at least one of the portions of the appliance is operable independently of the other.

9. An appliance as claimed in any preceding claim, in which comprises a control unit for controlling and regulating the power applied to each respective device from one or both batteries.

10. An appliance as claimed in any preceding claim, the appliance being a vacuum cleaner, in which:
a. said first portion comprises a body portion and the first device thereof comprises a motor of a motor and fan unit which is arranged to draw air into the vacuum cleaner; and
b. said second portion comprises a floor cleaning head provided with the second device.

11. An appliance as claimed in claim 10, in which the second device in the floor cleaning head comprises a motor for rotating a floor engaging member of the head.
